# EUROPEAN PATENT APPLICATION

(11) **EP 2 774 783 A1**
(43) Date of publication of application: **10.09.2014**
(21) Application number: 12845455.0
(22) Date of filing: 02.11.2012
(51) Int. Cl.: B60C 13/00, B60C 1/00, C08K 7/00, C08L 21/00

(54) **PNEUMATIC TIRE**

(30) Priority: 04.11.2011 JP 2011242736
(71) Applicant: Bridgestone Corporation, Tokyo 104-8340 (JP)
(72) Inventor: MAEKAWA, Kazuhiro, Kodaira-shi Tokyo 187-8531 (JP); OH, Jeeyoung, Kodaira-shi Tokyo 187-8531 (JP)
(74) Representative: Oxley, Robin John George
(86) International application number: PCT/JP2012/007049
(87) International publication number: WO 2013/065321

(57) **Abstract**

An object is to provide a pneumatic tire having a colored layer that is excellent in preventing contamination of the colored layer as compared to a conventional pneumatic tire having the colored layer formed thereon.

According to the present invention, the pneumatic tire having the colored layer formed through the intermediary of a non-contaminating rubber layer on an outer side of a side rubber of a tire side portion in a tire width direction, wherein the non-contaminating rubber layer contains layer compounds 21.

## Description

### TECHNICAL FIELD

The present invention relates to a pneumatic tire having a colored layer formed through the intermediary of a non-contaminating rubber layer on an outer side of a tire side portion in a tire width direction.

### BACKGROUND ART

In recent years, a tire having the colored layer formed on the tire side portion, such as a sidewall portion, for a decorative purpose has been commonly known as a high value-added tire.

The colored layer, however, has a problem to undergo brown discoloration due to intrusion of oil, an anti-aging agent and the like from a side rubber portion. As such, various techniques have been created in order to prevent such discoloration.

For example, Patent document 1 discloses a pneumatic tire that, by adjusting compositions of the colored layer and the non-contaminating rubber layer, has a colored layer with a relatively small thickness that has durability and an inhibitory effect on discoloration of the colored layer (contamination resistance).

The technique described above, however, is highly depending on contamination resistance of a polymer component alone and thus suffers from insufficient contamination resistance. As such, a development of a pneumatic tire capable of effectively suppressing the discoloration of the colored layer described above has been desired.

### RELATED ART DOCUMENT

### PATENT DOCUMENT

Patent Document 1: Japanese Patent Application Laid-Open Publication No. 2006-168616

### SUMMARY OF INVENTION

### TECHNICAL PROBLEM

An object of the present invention is to provide a pneumatic tire that is excellent in preventing contamination of the colored layer by optimizing the non-contaminating rubber layer formed between rubber of the tire side portion and the colored layer located outside the rubber of the tire side portion in the tire width direction.

### SOLUTION TO PROBLEM

The inventors have diligently researched to solve the above problem and, as a result, found that adding a special layer compound to the non-contaminating rubber layer may significantly improve prevention of the contamination of the colored layer as compared to conventional pneumatic tires, thereby accomplishing the present invention.

The present invention has been made based on such a finding and a summary thereof is as follows:
(1) A pneumatic tire having a colored layer formed through the intermediary of a non-contaminating rubber layer on an outer side of a tire side portion in a tire width direction, wherein the non-contaminating rubber layer contains layer compounds.
(2) The pneumatic tire according to (1) set forth above, wherein the layer compounds are swelling mica or flat clay.
(3) The pneumatic tire according to (1) or (2) set forth above, wherein a ratio of a longitudinal length of the layer compound to a thickness thereof is no less than 5.
(4) The pneumatic tire according to any one of (1) to (3) set forth above, wherein an average particle diameter of the layer compound is 0.2 to 30 µm.
(5) The pneumatic tire according to any one of (1) to (4) set forth above, wherein the thickness of the layer compound is within a range of 0.5 to 5.0 µm.
(6) The pneumatic tire according to any one of (1) to (5) set forth above, wherein 8 to 80 parts by mass of the layer compounds is contained with respect to 100 parts by mass of a rubber compound of a rubber composition constituting the non-contaminating rubber layer.
(7) The pneumatic tire according to any one of (1) to (6) set forth above, wherein the layer compounds are hydrophobic.
(8) The pneumatic tire according to any one of (1) to (7) set forth above, wherein the layer compounds are kneaded in a system free of water.
(9) The pneumatic tire according to any one of (6) to (8) set forth above, wherein, in the rubber compound constituting the non-contaminating rubber layer, a total amount of the layer compounds and carbon black is 55 to 80 parts by mass with respect to 100 parts by mass of the rubber component.

### EFFECT OF THE INVENTION

According to the present invention, a pneumatic tire having a colored layer that is excellent in preventing contamination of the colored layer as compared to a conventional pneumatic tire having the colored layer may be provided.

### BRIEF DESCRIPTION OF DRAWINGS

FIG. 1 is a cross-sectional view schematically illustrating a part of a pneumatic tire in a width direction according to one embodiment of the present invention;
FIG. 2 is a cross-sectional view schematically illustrating a magnified portion of a non-contaminating rubber layer of the pneumatic tire according to the present invention; and
FIGS. 3 show diagrams illustrating a shape of a layer compound according to the present invention: FIG. 3(a) illustrates a plan view of a layer compound 21 when viewed from thereabove; and FIG. 3(b) illustrates a cross-sectional view taken from line I-I of the layer compounds 21 illustrated in the FIG. 3(a).

### DESCRIPTION OF EMBODIMENT

The following is a description of a composition of the present invention and reasons for limitation thereof with reference to the accompanying drawings.

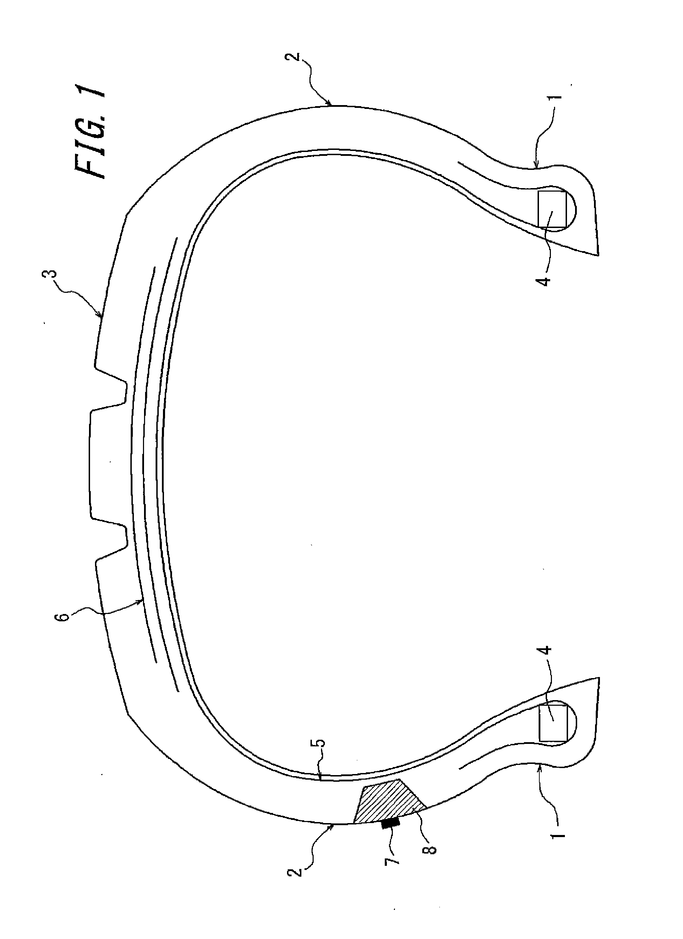

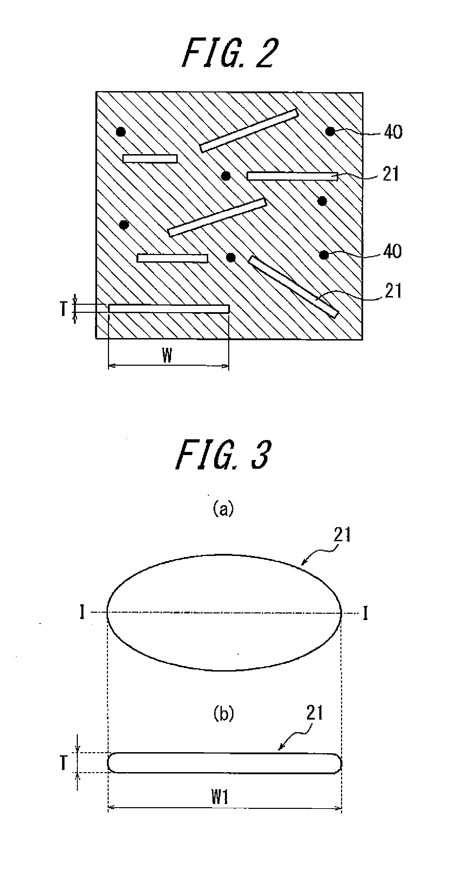

FIG. 1 is a cross-sectional view schematically illustrating a part of a tread of a pneumatic tire in a tire width direction according to one embodiment of the present invention. FIG. 2 is a cross-sectional view schematically illustrating a magnified portion of a non-contaminating rubber layer of the pneumatic tire according to the present invention.

The pneumatic tire according to the present invention, as illustrated in FIG. 1, is a pneumatic tire 1 having a colored layer 7 formed through the intermediary of a non-contaminating rubber layer 8 on an outer side of a side rubber of a tire side portion (a sidewall portion 2 in FIG. 1) in the tire width direction. Here, the tire side portion refers to a laterally located portion in a cross-section of the tire (a portion between a tread end to a bead portion) in the tire width direction.

The present invention is characterized in that, as illustrated in FIG. 2, the non-contaminating rubber layer 8 contains layer compounds 21.

When a contamination component 40 such as an anti-aging agent and the like penetrates the non-contaminating rubber layer 8, the layer compounds 21 work as an obstacles, extending a pass of the contamination component 40. As a result, intrusion of the contamination component 40 into the colored layer 7 can be effectively prevented. Consequently, while having a high adhesion to the side rubber, the pneumatic tire according to the present invention may improve prevention of contamination of the colored layer 7 as compared to conventional pneumatic tires having the colored layer 7.

### (Colored layer)

The colored layer formed on the pneumatic tire according to the present invention, as illustrated in FIG. 1, refers to a coating layer or a rubber layer 7 formed on the side rubber of the tire side portion, which is provided for the purpose of enhancing design characteristics of the pneumatic tire.

The coating layer may be a layer formed by, for example, ink-using printing, paint coating, adhesion of a sticker which has been pre-formed separately from the pneumatic tire and the like.

The rubber composition constituting the colored layer, from the viewpoint of securing contamination resistance, preferably contains, but not particularly limited to, a rubber component containing at least one of isobutylene-isoprene rubber (IIR), ethylene propylene rubber (EPM), acrylonitrile butadiene rubber (NBR), chlorosulfonated polyethylene rubber (CSM), and urethane rubber (U). Further, a component constituting the colored layer is preferably epoxy-, ester-, or acrylic-based aqueous or oily components, which are generally used as coating materials.

Also, an amount of isobutylene-isoprene rubber (IIR), ethylene propylene rubber (EPM), acrylonitrile butadiene rubber (NBR), chlorosulfonated polyethylene rubber (CSM), or urethane rubber (U) contained in the rubber component is preferably within a range of 0 to 100 parts by mass with respect to 100 parts by mass of the rubber component. When the amount is within the range, the contamination resistance of the colored layer may be effectively exhibited.

Also, the rubber component may appropriately contain other common tire rubber components. For example, the rubber component may include at least one of natural rubber (NR), isoprene rubber (IR), butadiene rubber (BR), styrene-butadiene rubber (SBR), chloroprene rubber (CR), and acrylonitrile-butadiene rubber (NBR).

In order to form a white rubber layer as the colored layer, a white filler is blended. The amount of the white filler is preferably within a range of 40 to 120 parts by mass with respect to 100 parts by mass of the rubber component, more preferably no less than 60 parts by mass, and particularly preferably no more than 100 parts by mass.

The white filler may be, for example, titanium oxide, magnesium oxide, calcium carbonate, magnesium carbonate, aluminum hydroxide, magnesium hydroxide, clay, talc, or the like. In using titanium oxide, for example, there are effects such as, in addition to contribution as the white filler, prevention of deterioration of the rubber composition due to ultraviolet rays and improvement in color fastness and durability.

In order to form the colored layer in another color, a coloring pigment of blue, red, yellow, green, or the like in an amount of approximately 0.5 to 30 parts by mass, for example, with respect to 100 parts by mass of the rubber component may be blended in place of, or together with, the white filler described above.

Also, a crosslinking agent, a vulcanization accelerator and the like may be further blended in the rubber composition constituting the colored layer. As the crosslinking agent, an organic peroxide and a sulfur-based vulcanizing agent are preferably used, and an amount thereof may be, for example, 0.3 to 3.0 pats by mass with respect to 100 parts by mass of the rubber component.

As the organic peroxide, benzoyl peroxide, dicumyl peroxide, di-t-butyl peroxide, t-butyl cumyl peroxide, methyl ethyl ketone peroxide, cumene hydroperoxide, 2,5-dimethyl-2,5-di (t-butylperoxy) hexane and the like may be used. As the sulfur-based vulcanizing agent, for example, sulfur, morpholine disulfide and the like may be used.

As the vulcanization accelerator, at least one of, for example, sulfonamide-, thiazole-, thiuram-, thiourea-, guanidine-, dithiocarbamate-, aldehyde-amine-, aldehyde-ammonia-, imidazoline-, and xanthate-based vulcanization accelerators may be used.

Also, in order to improve a workability, a softening agent may be blended in the rubber composition. As the softening agent, here, petroleum softeners such as process oil, lubricating oil, paraffin, liquid paraffin, petroleum asphalt and vaseline, fatty oil-based softeners such as castor oil, linseed oil, rapeseed oil and coconut oil, and wax such as beeswax, carnauba wax and lanolin, as well as tall oil, sub, linoleic acid, palmitic acid, stearic acid, lauric acid and the like may be mentioned.

Further, a plasticizer such as, for example, DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (butyl benzyl phthalate), DWP (dilauryl phthalate), DCHP (dicyclohexyl phthalate) and the like may be used.

In the rubber composition, a scorch retarder for preventing or delaying scorching such as, for example, organic acid such as phthalic anhydride, salicylic acid and benzoic acid, a nitrose compound such as N-nitroso diphenylamine, and N-cyclohexylthio phthalimide may be blended.

Note that the rubber composition constituting the colored layer is preferably free of anti-aging agent, as it causes discoloration of the colored layer.

In the rubber composition constituting the colored layer, also, a silane coupling agent is preferably blended. The silane coupling agent has an effect to strengthen a bond between a white-based reinforcing agent such as silica and the rubber composition and improve dispersibility of the white-based reinforcing agent in the rubber composition. As the silane coupling agent, one having, for example, a thiol-, amine-, or halogen-based functional group may be appropriately used alone or in combination with one or more of them.

Further, a thickness of the colored layer in the tire width direction is preferably, but not particularly limited to, within a range of 0.5 to 3.0 mm, when the colored layer is formed of colored rubber. When the thickness is smaller than 0.5 mm, design properties may not be sufficiently ensured. When the thickness exceeds 3.0 mm, on the other hand, manufacturing cost increases.

Also, a thickness of the coating layer, when the colored layer is formed by paint coating, is preferably within a range of 5 to 100 µm. When the thickness is smaller than 5 µm, the design properties may not be sufficiently ensured. When the thickness exceeds 100 µm, on the other hand, the manufacturing cost increases.

### (Non-contaminating rubber layer)

The non-contaminating rubber layer formed in the pneumatic tire according to the present invention, as illustrated in FIG. 1, corresponds to a layer 20 formed between the side rubber of the tire side portion and the colored layer 7 that ensures adhesion between the side rubber and the colored layer 7 and prevents intrusion of the anti-aging agent into the colored layer 7. The non-contaminating rubber layer 8, as illustrated in FIG. 2, contains the layer compounds 21. Since the layer compounds 21 functions as the obstacle, the penetration path of contaminants such as the anti-aging agent and the like is extended, thereby suppressing the intrusion of the contaminants into the colored layer through the non-contaminating rubber layer 8.

The layer compounds 21, as illustrated in FIG. 2, have a layer-shape and functions as an obstruction member by extending the penetration path of the anti-aging agent and the like. Here, the layer-shape means a shape having a width W larger than a thickness T when the layer compounds 21 are viewed from the cross-section thereof in the tire width direction.

From the viewpoint of extending the penetration path of the contaminants such as the anti-aging agent and the like, the layer compound is preferably an inorganic compound having a large aspect ratio of the thickness T and the width W, more preferably swelling mica or flat clay, in particular. Since swelling mica and flat clay are relatively readily available as compared to other layer compounds and are very strong and do not fracture in the non-contaminating rubber layer, the layer compounds of those materials may effectively exhibit the effect to extend the penetration path of the contaminants.

Also, the layered compound is preferably kneaded well together with a polymer component such as rubber and the like in a system free of water. In using hydrophobic swelling mica, delamination is caused due to the polymer entering between the layers during the kneading and, in consequence, an aspect ratio compared to that of non-swelling mica is improved and the contamination may be further prevented.

Here, FIGS. 3 show diagrams illustrating an example of the shape of the layer compound 21: FIG. 3(a) illustrates the layer compound 21 when viewed from above; and FIG. 3(b) illustrates a cross-sectional view taken from line I-I of the layer compound 21 illustrated in the FIG. 3(a).

As illustrated in FIGS. 3, the layer compound 21 has a ratio of a longitudinal length (width) W1 to the thickness T that is preferably no less than 5, more preferably no less than 10. When the ratio of the longitudinal length to the thickness is smaller than 5, the width W of the layer compound is so small that the layer compound possibly degrades its performance to prevent the contamination of the colored layer and, further, possibly functions as a fracture nucleus of a barrier rubber, deteriorating durability of the barrier rubber. Note that the longitudinal length W1 of the layer compound 21 refers to a maximum length (the width W) of the layer compound 21 as illustrated in FIGS. 3.

Also, when an average particle diameter of a layer- or plate-shaped clay mineral is too large, bending resistance reduces. On the other hand, when the average particle diameter is too small, the effect to improve the performance to prevent the contamination may not be obtained. Therefore, the average particle diameter is preferably within a range of 0.2 to 30 µm, more preferably within a range of 0.2 to 10 µm.

The thickness T of the layer compound is preferably within a range of 0.5 to 5.0 µm. When the thickness T is smaller than 0.5 µm, the penetration path of the contaminants may not be sufficiently extended, causing deterioration of the performance to prevent the contamination of the colored layer. When the thickness T exceeds 5.0 µm, on the other hand, the layer compound is so thick that rolling resistance of the tire may possibly be deteriorated.

Note that FIG. 2 and FIGS. 3, for the purpose of simplification of the description of the present invention, schematically illustrate a portion of the non-contaminating rubber layer 8 and the layer compounds 21. Accordingly, shapes, scales and states of the non-contaminating rubber layer 8 and the layer compounds 21 are different from actual ones.

Preferably, the layer compounds are hydrophobic so as to facilitate the entering of the polymer component into the layer compounds and improve dispersibility of the layered compound. Here, hydrophobicity means a property having, when an SP value of the water according to a Fedors method is 26, the SP value of no more than 13 according to the Fedors method.

Further, the amount of the layer compounds in the non-contaminating rubber layer with respect to 100 parts by mass of the rubber component of the rubber composition constituting the non-contaminating rubber layer is preferably 8 to 80 parts by mass, more preferably 8 to 30 parts by mass, particularly preferably 15 to 25 parts by mass. When the amount of the layer compounds is smaller than 8 parts by mass, the amount of the layer compounds is too small to sufficiently extend the penetration path of the contaminants, possibly failing to ensure an excellent performance to prevent the contamination of the colored layer aforementioned. When the amount of the layer compounds exceeds 80 parts by mass, on the other hand, due to too much layer compound, crack growth resistance of the non-contaminating rubber layer and, also, the adhesion to the rubber of the tire side portion may possibly be deteriorated.

Further, when the colored layer contains carbon black, a total amount of the layer compounds in the rubber composition constituting the layer compounds and the carbon black with respect to 100 pars by mass of the rubber component is preferably 55 to 80 parts by mass, more preferably 64 to 73 parts by mass. When the total amount is smaller than 55 parts by mass, it is too small to ensure a satisfactory performance to prevent the contamination and, also, an increase in contractility of unvulcanized rubber is caused, possibly deteriorating the workability. When the total amount exceeds 80 parts by mass, on the other hand, the crack growth resistance may possibly be deteriorated due to too much filler.

Note that, as illustrated in FIG. 2, the layer compounds 21 are contained in the non-contaminating rubber layer 8 preferably in such a manner as to be oriented toward the colored layer from the rubber of the tire side portion, that is, to be opposite to a direction (an arrow A) in which the contaminants enter. Thereby, the layer compounds 21 may more effectively prevent the contaminants from intruding the colored layer. A method to provide the layer compounds 21 with the orientation may be, but not particularly limited to, for example, extrusion of the non-contaminating rubber by means of a tuber or the like such that a pressure is applied in a tire circumferential direction.

Although the rubber component of the rubber composition constituting the non-contaminating rubber layer is not particularly limited, the rubber component preferably contains non-diene rubber, from the viewpoint of ensuring the performance to prevent the contamination. Here, the "non-diene rubber" refers to rubber components that hardly have (specifically, 2.5 mol% or less of) a double bond in a main chain thereof. As the non-dien rubber, for example, isobutylene-isoprene rubber (IIR), ethylene propylene rubber (EPM, EPDM), urethane rubber (U), silicone rubber (Q), chlorosulfonated polyethylene rubber (CSM), acrylic rubber (ACM), fluororubber (FKM) and the like may be mentioned. When the rubber component contains the non-diene rubber, the barrier property against the anti-aging agent and the like may be ensured and, as a result, an excellent performance to prevent the contamination of the colored layer may be achieved.

In particular, the non-diene rubber constituting the rubber component is preferably at least one of isobutylene-isoprene rubber (IIR), ethylene propylene rubber (EPM, EPDM), urethane rubber (U), and chlorosulfonated polyethylene rubber (CSM). Thereby, the barrier property against the anti-aging agent and like may be ensured and the performance to prevent the contamination of the colored layer may be improved. When the rubber component is formed of other non-diene rubber, there is a risk that a satisfactory performance to prevent the contamination of the colored layer may not be ensured.

Note that whether to color the non-contaminating rubber layer is not particularly limited. For example, in order to form the non-contaminating rubber layer in white, the white filler is blended. In order to form the non-contaminating rubber layer in other colors, a coloring pigment of a desired color is blended. Also, as with the side rubber, carbon black may be blended. A blending amount of the filler is not particularly limited, either.

Further, in the rubber composition constituting the non-contaminating rubber layer, the crosslinking agent and the vulcanization accelerator may be blended. As the crosslinking agent, as with the colored layer, t organic peroxide and a sulfur-based vulcanization accelerator are preferably used, and a blending amount thereof is within a range of, for example, 0.3 to 3.0 parts by mass with respect to 100 parts by mass of the rubber component.

The vulcanization accelerator may be at least one of, for example, sulfonamide-, thiazole-, thiuram-, thiourea-, guanidine-, dithiocarbamate-, aldehyde-amine-, aldehyde-ammonia-, imidazoline-, and xanthate-based vulcanization accelerators. Among them, from the viewpoint of obtaining strong adhesion to the side rubber, the thiazole-based vulcanization accelerator is preferably used.

In order to improve the workability, the softening agent may be blended in the rubber composition described above. Here, the softening agent may be the same as one used for the rubber composition constituting the colored layer described above. Further, the plasticizer, the scorch retarder, and the silane coupling agent may also be the same as ones used for the rubber composition constituting the colored layer described above.

Note that the rubber composition constituting the non-contaminating rubber layer is free of anti-aging agent, as the anti-aging agent causes discoloration of the colored layer.

Further, a thickness of the non-contaminating rubber layer in the tire width direction is preferably, but not particularly limited to, within a range of 0.5 to 3.0 mm. The performance to prevent the contamination may not be secured when the thickness is smaller than 0.5 mm, while the manufacturing cost increases when the thickness exceeds 3.0 mm.

### (Rubber of tire side portion)

The rubber located on the tire side portion, as illustrated in FIG 1, is a rubber member for forming the tire side portion such as the side wall portion 2 of the pneumatic tire. In the pneumatic tire of the present invention, the colored layer 7 is formed through the intermediary of the non-contaminating rubber layer on the outer side of the tire side portion in the tire width direction. The rubber composition constituting the rubber of the tire side portion 2 is not particularly limited but may be one commonly used for the pneumatic tire.

### EXAMPLES

Hereinafter, the present invention is described in greater detail by using examples. However, the present invention is not limited thereto.

### (Examples 1 to 19 and Comparative Examples 1 to 4)

Using a kneader, compounding components shown in Tables 1a - 1c other than sulfur and the vulcanization accelerator were kneaded at about 130°C for 3 minutes. Next, sulfur and the vulcanization accelerator were added and the mixture was further kneaded by using a biaxial open roll at about 100°C for 2 minutes, and the resulting material was taken out in the form of a sheet having a predetermined thickness. From this sheet, specimens of Examples and Comparative Examples were prepared.

Note that, after the kneading, an aspect ratio of the compounds contained in the non-contaminating rubber layer shown in Tables 1a - 1c is as follows:
swelling mica (hydrophobic)>flat clay>swelling mica (hydrophilic)> mica> silica.

### (Evaluations)

### (1) Performance to prevent contamination

A laminated body having the specimens prepared in the Examples and Comparative Examples placed between contaminating rubber containing a certain amount of the contaminants and white rubber was vulcanized, and then a color difference of a surface of the white rubber before and after being stored in a thermostatic bath at the temperature of 100°C for 48 hours was measured by using a spectrophotometer CM-700d (produced by Konica Minolta, Inc.). Thus, an evaluation of the performance to prevent the contamination was conducted. Results of the evaluation are shown in Tables 1a - 1c.

Note that, for the evaluation, the performance to prevent the contamination is represented by a relative value with respect to that of Comparative Example 2 set to 100. The higher the value is, the better the performance is, meaning a good result.

### (2) Adhesion to adjacent rubber

By vulcanizing the barrier rubber and the side rubber in a state that they are overlapping one another, a test sample was produced. Then, while one of the rubbers of the test sample is fixed, the other rubber was pulled so as to measure strength of an interface between the rubbers, thereby an evaluation was conducted. Methods of producing and evaluating the sample for the evaluation are in conformity with JIS K 6256. Results are shown in Tables 1a - 1c.

Note that, for the evaluation of the samples in Examples and Comparative Examples, the adhesion is represented by a relative value with respect to that of Comparative Example 2 set to 100. The higher the value is, the better the adhesion is, meaning a good result.

### (3) Workability (Mill shrinkage test)

Samples of unvulcanized rubber constituting the rubber composition prepared in Examples and Comparative Examples were wound about a roll in 3 inches at the temperature of 70°C at intervals of 2 mm on the roll and rotated for 2 minutes. Next, the rotation is stopped and samples were allowed to stand for 1 minutes. Then, a line in 6 cm was cut out and allowed to stand for 3 minutes. Thereafter, shrinkage of the line in 6 cm was visually measured by using a measuring means. Results of the measurement are shown in Tables 1a - 1c. The shrinkage is represented by an index with respect to that of Comparative Example 2 set to 100. The larger the index is, the better the workability is.

### (4) Crack growth resistance

By using a cyclic fatigue test apparatus, a crack of 1 mm in length was generated at a center of a rubber sample having a dumbbell shape. Then, a cyclic fatigue test was conducted under conditions of constant strain at 100%, no initial strain, and 300 rpm so as to measure a time for the crack to grow and cause fracture.

A fraction time is represented by an index with respect to that of Comparative Example 2 set to 100. The larger the index is, the longer the fraction time is, meaning better crack growth resistance. Results are shown in Tables 1 a - 1c.

**[Table 1a]**

| | | | Examples | | | | | | | |
|---|---|---|---|---|---|---|---|---|---|---|
| | | | 1 | 2 | 3 | 4 | 5 | 6 | 7 | 8 |
| Barrier rubber | Isobutylene-isoprene rubber ^{*1} | Parts by mass | 100 | 100 | 100 | 100 | 100 | 100 | 100 | 100 |
| | Carbon black ^{*2} | | 48 | 48 | 48 | 48 | 48 | 48 | 48 | 48 |
| | Zinc oxide | | 3 | 3 | 3 | 3 | 3 | 3 | 3 | 3 |
| | Vulcanization accerelator ^{*3} | | 2 | 2 | 2 | 2 | 2 | 2 | 2 | 2 |
| | Swelling mica (hydrophilic) ^{*5} | | 30 | 50 | 80 | 100 | - | - | - | - |
| | Swelling mica (hydrophobic) ^{*6} | | - | - | - | - | 30 | 50 | 80 | 100 |
| | Flat clay ^{*7} | | - | - | - | - | - | - | - | - |
| | Silica | | - | - | - | - | - | - | - | - |
| | Calcium carbonate | | - | - | - | - | - | - | - | - |
| | Sulfur | | 0.4 | 0.4 | 0.4 | 0.4 | 0.4 | 0.4 | 0.4 | 0.4 |
| | Stearic acid ^{*4} | | 1 | 1 | 1 | 1 | 1 | 1 | 1 | 1 |
| Side rubber | Natural rubber | Parts by mass | 100 | 100 | 100 | 100 | 100 | 100 | 100 | 100 |
| | Carbon black ^{*2} | | 60 | 60 | 60 | 60 | 60 | 60 | 60 | 60 |
| | Zinc oxide | | 5 | 5 | 5 | 5 | 5 | 5 | 5 | 5 |
| | Vulcanization accerelator ^{*3} | | 3 | 3 | 3 | 3 | 3 | 3 | 3 | 3 |
| | Sulfur | | 5 | 5 | 5 | 5 | 5 | 5 | 5 | 5 |
| | Stearic acid ^{*4} | | 1 | 1 | 1 | 1 | 1 | 1 | 1 | 1 |
| Evaluation | Performance to prevent contamination | | 115 | 115 | 115 | 115 | 115 | 115 | 115 | 115 |
| | Workability | | 104 | 106 | 109 | 110 | 104 | 106 | 109 | 110 |
| | Crack growth resistance | | 98 | 83 | 76 | 72 | 95 | 81 | 68 | 63 |
| | Adhesion | | 96 | 90 | 77 | 74 | 93 | 87 | 72 | 71 |

**[Table 1b]**

| | | | Examples | | | | | | | |
|---|---|---|---|---|---|---|---|---|---|---|
| | | | 10 | 11 | 12 | 13 | 14 | 15 | 16 | 17 |
| Barrier rubber | Isobutylene-isoprene rubber ^{*1} | Parts by mass | 100 | 100 | 100 | 100 | 100 | 100 | 100 | 100 |
| | Carbon black ^{*2} | | 48 | 48 | 48 | 48 | 48 | 48 | 48 | 30 |
| | Zinc oxide | | 3 | 3 | 3 | 3 | 3 | 3 | 3 | 3 |
| | Vulcanization accerelator ^{*3} | | 2 | 2 | 2 | 2 | 2 | 2 | 2 | 2 |
| | Swelling mica (hydrophilic) ^{*5} | | - | - | - | - | - | - | - | - |
| | Swelling mica (hydrophobic) ^{*6} | | - | - | - | - | - | - | - | - |
| | Flat clay ^{*7} | | 50 | 80 | 100 | 40 | 25 | 16 | 8 | 40 |
| | Silica | | - | - | - | - | - | - | - | - |
| | Calcium carbonate | | - | - | - | - | - | - | - | - |
| | Sulfur | | 0.4 | 0.4 | 0.4 | 0.4 | 0.4 | 0.4 | 0.4 | 0.4 |
| | Stearic acid ^{*4} | | 1 | 1 | 1 | 1 | 1 | 1 | 1 | 1 |
| Side rubber | Natural rubber | Parts by mass | 100 | 100 | 100 | 100 | 100 | 100 | 100 | 100 |
| | Carbon black ^{*2} | | 60 | 60 | 60 | 60 | 60 | 60 | 60 | 60 |
| | Zinc oxide | | 5 | 5 | 5 | 5 | 5 | 5 | 5 | 5 |
| | Vulcanization accerelator ^{*3} | | 3 | 3 | 3 | 3 | 3 | 3 | 3 | 3 |
| | Sulfur | | 5 | 5 | 5 | 5 | 5 | 5 | 5 | 5 |
| | Stearic acid ^{*4} | | 1 | 1 | 1 | 1 | 1 | 1 | 1 | 1 |
| Evaluation | Performance to prevent contamination | | 122 | 122 | 122 | 121 | 119 | 117 | 114 | 117 |
| | Workability | | 108 | 110 | 113 | 109 | 107 | 104 | 103 | 103 |
| | Crack growth resistance | | 84 | 77 | 74 | 92 | 99 | 100 | 101 | 93 |
| | Adhesion | | 92 | 74 | 72 | 93 | 99 | 100 | 101 | 94 |

**[Table 1c]**

| | | | | | Comparative Examples | | | |
|---|---|---|---|---|---|---|---|---|
| | | | 18 | 19 | 1 | 2 | 3 | 4 |
| Barrier rubber | Isobutylene-isoprene rubber ^{*1} | Parts by mass | 100 | 100 | 100 | 100 | 100 | 100 |
| | Carbon black ^{*2} | | 30 | 30 | 48 | 48 | 48 | 48 |
| | Zinc oxide | | 3 | 3 | 3 | 3 | 3 | 3 |
| | Vulcanization accerelator ^{*3} | | 2 | 2 | 2 | 2 | 2 | 2 |
| | Swelling mica (hydrophilic) ^{*5} | | - | - | - | - | - | - |
| | Swelling mica (hydrophobic) ^{*6} | | - | - | - | - | - | - |
| | Flat clay ^{*7} | | 25 | 13 | - | - | - | - |
| | Silica | | - | - | - | 30 | 50 | - |
| | Calcium carbonate | | - | - | - | - | - | 50 |
| | Sulfur | | 0.4 | 0.4 | 0.4 | 0.4 | 0.4 | 0.4 |
| | Stearic acid ^{*4} | | 1 | 1 | 1 | 1 | 1 | 1 |
| Side rubber | Natural rubber | Parts by mass | 100 | 100 | 100 | 100 | 100 | 100 |
| | Carbon black ^{*2} | | 60 | 60 | 60 | 60 | 60 | 60 |
| | Zinc oxide | | 5 | 5 | 5 | 5 | 5 | 5 |
| | Vulcanization accerelator ^{*3} | | 3 | 3 | 3 | 3 | 3 | 3 |
| | Sulfur | | 5 | 5 | 5 | 5 | 5 | 5 |
| | Stearic acid ^{*4} | | 1 | 1 | 1 | 1 | 1 | 1 |
| Evaluation | Performance to prevent contamination | | 111 | 116 | 97 | 100 | 102 | 100 |
| | Workability | | 96 | 100 | 87 | 100 | 96 | 104 |
| | Crack growth resistance | | 101 | 98 | 105 | 100 | 86 | 75 |
| | Adhesion | | 101 | 100 | 103 | 100 | 88 | 73 |

| | | | | | | | | |
|---|---|---|---|---|---|---|---|---|
| *1 Bromobutyl 2255 produced by JSR Corporation *2 #55-NP produced by Asahi Carbon Co., Ltd. *3 NOCCELER DM-P produced by Ouch Shinko Chemical Industrial Co., Ltd. *4 MXST produced by MIYOSHI OIL & FAT Co., Ltd. *5 "SOMASIF ME-100" with an average particle diameter of 6 µm produced by Co-op Chemical Co., Ltd. *6 "SOMASIF MAE" with an average particle diameter of 6 µm produced by Co-op Chemical Co., Ltd. *7 "POLYFIL DL" with an average particle diameter of 1 µm and a ratio of a longitudinal length to a thickness is 10 produced by J. M. Huber Corporation | | | | | | | | |

From the results in Tables 1a - 1c, it was found that each of the samples of Examples 1 to 19 is better in the performance to prevent the contamination of the colored layer and has higher adhesion as compared to the samples of Comparative Examples 1 to 4 and are capable of securing the workability and the crack growth resistance to a certain level. It was also found that, on the other hand, the performance to prevent the contamination and adhesion, in particular, of the samples of Comparative Examples 1 to 3 are inferior to those of Examples.

### INDUSTRIAL APPLICABILITY

The present invention may provide a pneumatic tire having the colored layer formed thereon that is excellent in preventing contamination of the colored layer as compared to conventional pneumatic tires having the colored layer formed thereon. As a result, a duration of use of the pneumatic tire may be extended and an industrially useful effect is exhibited.

### REFERENCE SIGNS LIST

- 1: bead portion
- 2: tire side portion
- 3: tread portion
- 4: bead core
- 5: carcass
- 6: belt
- 7: colored layer
- 8: non-contaminating rubber layer
- 21: layer compound
- 40: contamination component

## Claims

1. A pneumatic tire having a colored layer formed through the intermediary of a non-contaminating rubber layer on outer side of a tire side portion in a tire width direction, wherein
the non-contaminating rubber layer contains layer compounds.

2. The pneumatic tire according to claim 1, wherein the layer compounds are swelling mica or flat clay.

3. The pneumatic tire according to claim 1 or 2, wherein a ratio of a longitudinal length of the layer compound to a thickness thereof is no less than 5.

4. The pneumatic tire according to any one of claims 1 to 3, wherein an average particle diameter of the layer compound is 0.2 to 30 µm.

5. The pneumatic tire according to any one of claims 1 to 4, wherein the thickness of the layer compound is within a range of 0.5 to 5.0 µm.

6. The pneumatic tire according to any one of claims 1 to 5, wherein 8 to 80 parts by mass of the layer compound is contained with respect to 100 parts by mass of a rubber compound of a rubber composition constituting the non-contaminating rubber layer.

7. The pneumatic tire according to any one of claims 1 to 6, wherein the layer compound is hydrophobic.

8. The pneumatic tire according to any one of claims 1 to 7, wherein the layer compound is kneaded in a system free of water.

9. The pneumatic tire according to any one of claims 6 to 8, wherein, in the rubber compound constituting the non-contaminating rubber layer, a total amount of the layer compound and carbon black is 55 to 80 parts by mass with respect to 100 parts by mass of the rubber component.
